# EUROPÄISCHE PATENTSCHRIFT

(11) **EP 2 586 595 B1**
(45) Veröffentlichungstag und Bekanntmachung des Hinweises auf die Patenterteilung: **20.05.2015**
(21) Anmeldenummer: 11186527.5
(22) Anmeldetag: 25.10.2011
(51) Int. Cl.: B29C 65/60, B29C 65/06

(54) **Verfahren zum Verbinden eines Kunststoffwerkstücks mit einem weiteren Werkstück**
Process for connecting a plastic workpiece with another workpiece
Procédé de raccordement d'une pièce en matière synthétique à une autre pièce

(43) Veröffentlichungstag der Anmeldung: 01.05.2013
(73) Patentinhaber: Helmholtz-Zentrum Geesthacht Zentrum für Material- und Küstenforschung GmbH, 21502 Geesthacht (DE)
(72) Erfinder: de Traglia Amancio Filho, Sergio, 21039 Börnsen (DE); dos Santos, Jorge F., 21395 Tespe (Avendorf) (DE); Bastos Abibe, André, 21502 Geesthacht (DE)
(74) Vertreter: UEXKÜLL & STOLBERG

(56) Entgegenhaltungen:
- EP-A1- 1 949 999
- WO-A2-91/11309
- DE-A1- 3 109 500
- DE-A1- 3 543 105
- FR-A1- 2 854 606
- JP-A- 1 278 331
- JP-A- 4 142 919
- JP-A- 53 000 266
- JP-A- 53 075 280
- JP-A- 61 189 925
- JP-A- 62 087 323
- JP-U- H0 227 317
- US-A- 5 153 978
- US-A1- 2007 044 901

## Beschreibung

Die vorliegende Erfindung betrifft ein Verfahren zum Verbinden eines Kunststoffwerkstücks mit einem weiteren Werkstück.

In der Automobil- und Luftfahrtindustrie werden zunehmend Bauteile verwendet, in denen Kunststoffwerkstücke formschlüssig mit anderen Werkstücken aus Metall oder Verbundwerkstoffen verbunden werden müssen. Hierzu bieten sich insbesondere verfahren an, die die Verformbarkeit des Kunststoffwerkstücks ausnutzen.

Aus dem Stand der Technik ist eine Reihe von Verfahren bekannt, mit deren Hilfe ein Kunststoffwerkstück mit einem weiteren Werkstück verbunden wird, in dem sie die Verformbarkeit des Kunststoffwerkstücks ausnutzen. Beispielsweise ist es bekannt, dass ein Kunststoffwerkstück einen Vorsprung aufweist, der sich von einer Anlageoberfläche weg erstreckt. An der Anlageoberfläche wird ein weiteres Werkstück angelegt, das eine Durchgangsöffnung aufweist. Diese ist so ausgebildet, dass sie den Vorsprung aufnimmt, wobei der Vorsprung durch die Durchgangsöffnung hindurch aus dem weiteren Werkstück hinaus ragt. Zum Verbinden des Kunststoffwerkstücks mit dem weiteren Werkstück wird der aus dem weiteren Werkstück herausragende Teil des Vorsprungs mechanisch verformt. In der einfachsten Ausführungsform dieser Methode wird über ein Werkzeug so viel Druck auf den Vorsprung ausgeübt, dass sich dieser plastisch verformt. Man spricht davon, dass das Kunststoffwerkstück und das weitere Werkstück kalt verbunden worden sind. Dieses Verbindungsverfahren heißt Staking und weist sehr kurze Taktzeiten auf.

In vielen Kunststoffen entstehen bei einem solchen kalten Verbinden jedoch Risse in dem Vorsprung, wodurch die Haltbarkeit der Verbindung zwischen dem weiteren Werkstück und dem Kunststoffwerkstück eingeschränkt ist. Um die Belastung durch die Verformung zu verringern, kann dieser vor dem Verformen plastifiziert werden. Dies kann beispielsweise durch Einblasen von heißer Luft erfolgen. Dabei wird der Kunststoff durch die heiße Luft jedoch nur sehr langsam erwärmt, wodurch die Taktzeit des Verfahrens stark ansteigt. In anderen Ausführungsformen wird ein erwärmtes Werkzeug zum Verformen des Vorsprungs eingesetzt. Dabei wird das Werkzeug je nach Ausführungsform mittels Heizwiderständen, Ultraschall, Infrarotstrahlung, Laserstrahlung oder anderen Mitteln erwärmt. Der plastifizierte Vorsprung lässt sich ohne starke Materialbelastungen plastisch verformen. Die auf diese Weise entstehenden "warmen" Verbindungen sind deutlich haltbarer als die zuvor genannten "kalten" Verbindungen.

Allerdings weisen alle Verfahren, die eine warme Verbindung bereitstellen, einen besonders hohen Energieverbrauch auf, da die Werkzeuge sehr heiß sein müssen, um eine kurze Taktzeit zu erreichen. Die hierbei regelmäßig verwendeten Ultraschall- und Laserheizungen sind zudem äußerst aufwendig herzustellen und zu warten.

Schließlich ist es aus der U.S. 7,497,917 bekannt, dass bei dem Verbinden eines Kunststoffwerkstücks mit einem metallischen Werkstück ein Reibwerkzeug in Kontakt mit dem Bereich der Oberfläche des metallischen Werkstücks gebracht wird, der die Öffnung umgibt, durch die sich der Vorsprung des Kunststoffwerkstücks erstreckt. Durch das rotierende Reibwerkzeug wird Energie in das metallische Werkstück eingebracht, was zu dessen Erwärmung und nachfolgend auch zur Erwärmung des Kunststoffwerkstücks und des dran vorgesehenen Vorsprungs führt. Dadurch wird der Vorsprung plastifiziert, und es kommt zu einer formschlüssigen Verbindung.

Nachteilig hieran ist wiederum, dass die Taktzeiten aufgrund der erforderlichen Wärmeübertragung zwischen Metallwerkstück und Kunststoffwerkstück vergleichsweise lang sind, wobei die Wärmeübertragung maßgeblich von der Beschaffenheit der Anlagefläche zwischen Kunststoffwerkstück und Metallwerkstück beeinflusst wird.

Die DE 35 43 105 A1 offenbart ein Verfahren zum Verbinden eines Kunststoffwerkstücks mit einem weiteren Werkstück, wobei das Kunststoffwerkstück und das weitere Werkstück an Anlageoberflächen derart aneinander angelegt werden, dass sich ein Stift des Kunststoffwerkstücks durch eine Durchgangsöffnung in dem weiteren Werkstück hindurch erstreckt. Danach kommt ein Reibwerkzeug zum Einsatz, dessen rotierender Reibstift mit seiner Reibfläche auf die Endfläche des Stifts aufgelegt wird, und durch eine Rotation des Reibstifts wird das Material des Stifts des Kunststoffwerkstücks plastifiziert und in der Folge derart verformt, dass ein Formschluss zwischen dem Kunststoffwerkstück und dem weiteren Werkstück hergestellt wird.

Aus der U.S. 5,153,978 ist ein Verfahren zum Verbinden zweier Werkstücke mittels eines sich durch zwei fluchtende Durchgangsöffnungen in den beiden Werkstücken erstreckenden Stifts aus einem Faserverbundmaterial bekannt, wobei ein Werkzeug mit einem Reibstift auf die Oberfläche des Stifts aufgesetzt wird, so dass der Stift durch eine Rotation des Reibstifts plastifiziert und derart verformt wird, dass ein Formschluss der beiden Werkstücke durch den verformten Stift erreicht wird. Während der Rotation des Reibstifts auf dem Stift wird ein Klemmring, der den Reibstift umgibt, zum Festhalten der beiden Werkstücke aneinander auf die Oberfläche des oberen Werkstücks aufgesetzt.

Ferner beschreiben die DE 35 43105 A1, die US 5,153,978 A, die WO 91/11309 A2, die JP 61 189925 A, die JP 53 000266 A, die JP 1 278331 A, die JP H02 27317 U, die JP 4 142919 A, die DE 31 09 500 A1, die FR 2 854 606 A1, die JP 53 075280 A, die JP 62 087323 A, die US 2007/044901 A1 und die EP 1 949 999 A1 mit Hinblick auf die vorliegende Erfindung gattungsgemäße Verfahren.

Ausgehend vom Stand der Technik ist es daher die Aufgabe der vorliegenden Erfindung, ein Verfahren zum formschlüssigen Verbinden eines Kunststoffwerkstücks mit einem weiteren Werkstück bereitzustellen, das auf aufwendige Mittel verzichtet, wenig Energie verbraucht und kurze Taktzeiten aufweist.

Diese Aufgabe wird durch ein Verfahren mit den folgenden Schritten gelöst:
- Bereitstellen eines Kunststoffwerkstücks mit einer ersten Anlageoberfläche, an der ein sich davon wegerstreckender Stift vorgesehen ist, der eine von der ersten Anlageoberfläche wegweisende Endfläche hat,
- Bereitstellen eines weiteren Werkstücks mit einer zweiten Anlageoberfläche und einer der zweiten Anlageoberfläche gegenüberliegenden Bearbeitungsfläche, wobei in dem weiteren Werkstück eine dem Querschnitt des Stifts angepasste Durchgangsöffnung vorgesehen ist, die sich von der zweiten Anlageoberfläche zu der Bearbeitungsoberfläche erstreckt,
- Anlegen des weiteren Werkstücks und des Kunststoffwerkstücks aneinander derart, dass die zweite Anlageoberfläche auf der ersten Anlageoberfläche liegt, wobei sich der Stift durch die Durchgangsöffnung hindurch über die Bearbeitungsoberfläche hinaus erstreckt,
- Anlegen eines Reibwerkzeugs an das weitere Werkstück,
   wobei das Reibwerkzeug einen um eine Rotationsachse rotierend angetriebenen Reibstift mit senkrecht zur Rotationsachse verlaufender Reibfläche und einen Klemmring mit einer senkrecht zur Rotationsachse verlaufenden Klemmfläche aufweist,
   wobei der Klemmring den Reibstift umgibt und der Reibstift und der Klemmring parallel zur Rotationsachse verfahrbar sind,
   wobei beim Anlegen die Reibfläche flächig auf der Endfläche und die Klemmfläche flächig auf der Bearbeitungsfläche aufgelegt wird,
- Rotieren des Reibstifts, sodass die zwischen der Reibfläche und der Endfläche durch Reibung entstehende Reibungswärme den Stift plastifiziert, und
- Verfahren des rotierenden Reibstifts parallel zur Rotationsachse auf die Bearbeitungsfläche zu, sodass sich der Stift plastisch verformt,
wobei das Reibwerkzeug eine um die Rotationsachse rotierend angetriebene und parallel zur Rotationsachse verfahrbare ringförmige Hülse mit einer senkrecht zur Rotationsachse verlaufenden Hülsenreibfläche aufweist,
wobei die Hülse zwischen dem Reibstift und dem Klemmring angeordnet ist,
wobei beim Rotieren des Reibstifts die Hülse rotiert wird und
wobei entweder
a) beim Verfahren des Reibstifts (31) hin zur Bearbeitungsfläche (15) die Hülse (33) von der Bearbeitungsfläche (15) weg verfahren wird oder
b) während des Verfahrens des Reibstifts (31) die Hülse (33) parallel mit der Reibfläche (39) hin zu der Bearbeitungsfläche (15) mitbewegt wird.

Bei dem erfindungsgemäßen Verfahren wird ein Kunststoffwerkstück mit einer ersten Anlageoberfläche bereitgestellt. An der Anlageoberfläche ist ein sich davon weg erstreckender Stift vorgesehen, der eine von der ersten Anlageoberfläche weg weisende Endfläche hat.

Zudem wird ein weiteres Werkstück bereitgestellt, das vorzugsweise aus einem Metall, einer Metalllegierung, einer Keramik oder einem Verbundwerkstoff gebildet ist. In einer weiteren bevorzugten Ausführung kann das weitere Werkstück auch aus einem Kunststoff gebildet sein. Das weitere Werkstück weist eine zweite Anlageoberfläche und eine der zweiten Anlageoberfläche gegenüberliegende Bearbeitungsfläche auf. In dem weiteren Werkstück ist eine Durchgangsöffnung vorgesehen, die dem Querschnitt des Stiftes angepasst ist und die sich von der zweiten Anlageoberfläche zu der Bearbeitungsfläche erstreckt.

Das weitere Werkstück und das Kunststoffwerkstück werden derart aneinander angelegt, dass die zweite Anlageoberfläche des weiteren Werkstücks auf der ersten Anlageoberfläche des Kunststoffwerkstücks aufliegt. Der Stift erstreckt sich dabei durch die Durchgangsbohrung hindurch und über die Bearbeitungsfläche hinaus.

In einem weiteren Schritt wird ein Reibwerkzeug an dem weiteren Werkstück angelegt. Das Reibwerkzeug weist einen um eine Rotationsachse rotierend angetriebenen Reibstift mit senkrecht zur Rotationsachse verlaufender Reibfläche und einen Klemmring mit einer senkrecht zur Rotationsachse verlaufenden Klemmfläche auf. Dabei umgibt der Klemmring den Reibstift, und der Reibstift und der Klemmring sind parallel zur Rotationsachse verfahrbar. Das Reibwerkzeug wird derart angelegt, dass die Reibfläche flächig auf der Endfläche und die Klemmfläche flächig auf der Bearbeitungsfläche anliegen.

Im folgenden Schritt wird der Reibstift rotiert während der Klemmring fest auf der Bearbeitungsfläche aufliegt und nicht bewegt wird, sodass die nur zwischen Reibfläche und Endfläche durch Reibung entstehende Reibungswärme den Stift plastifiziert. Daraufhin wird der rotierende Reibstift parallel zur Rotationsachse auf die Bearbeitungsfläche zu verfahren, sodass sich der Stift plastisch verformt.

Der Vorteil des erfindungsgemäßen Verfahrens besteht in seiner außerordentlich hohen Effizienz. Zum einen kann dieses Verfahren mit den gleichen Vorrichtungen durchgeführt werden, die zum Reibschweißen verwendet werden, zum anderen ist der Energieverbrauch verglichen mit den Verfahren nach dem Stand der Technik sehr gering, da die kinetische Energie durch die Reibung äußerst effizient in Wärme umgewandelt wird. Insbesondere wird die Reibungswärme unmittelbar in das Kunststoffwerkstück eingebracht, wobei keine problembehafteten Wärmeleitungsprozesse auftreten.

Darüber hinaus ist die Taktzeit, die zum Herstellen einer erfindungsgemäßen Verbindung benötigt wird, kürzer als die Taktzeit, die die Verfahren nach dem Stand der Technik benötigen.

Daneben wird durch das Verfahren des Reibstifts die Verformung des freien Endes des Stifts unmittelbar bewirkt, sodass ein zuverlässiger Formschluss zwischen den Werkstücken sichergestellt ist.

Außerdem ist das verwendete Reibwerkzeug rein mechanisch gehalten und verzichtet auf komplexe Systeme zur Wärmeerzeugung. Dadurch werden die Wartungs- und Fertigungskosten reduziert.

Schließlich wird bei dem erfindungsgemäßen Verfahren vermieden, dass es zu einer Verunreinigung durch Material der Werkstücke in der Umgebung der Verbindung kommt, da der die Verbindung bzw. den Stift umgebende Klemmring sicherstellt, dass kein Materialauswurf auftritt.

In einer besonders bevorzugten Ausführungsform werden die Ausmaße der Reibfläche so gewählt, dass bei einer Rotation des Stiftes um die Rotationsachse die gesamte Endfläche unter allen Rotationswinkeln flächig an der Reibfläche anliegt. Hierdurch wird eine gleichmäßige Erwärmung und damit auch Plastifizierung des Stiftes sichergestellt ist.

Es ist weiterhin bevorzugt, dass der Stift zylinderförmig ausgeprägt ist. Dies ist besonders vorteilhaft, da die Durchgangsöffnung durch eine einfache Bohrung so ausgestaltet werden kann, dass ihr Innendurchmesser dem Außendurchmesser des Stiftes entspricht, wodurch die Festigkeit der Verbindung erhöht wird.

Gemäß der vorliegenden Erfindung weist das Reibwerkzeug eine Hülse mit einer senkrecht zur Rotationsachse verlaufenden Hülsenreibfläche auf. Die Hülse ist um die Rotationsachse rotierend angetrieben, parallel zur Rotationsachse verfahrbar und zwischen dem Reibstift und dem Klemmring angeordnet.

Bei einer ersten Alternative der vorliegenden Erfindung wird beim Rotieren des Reibstifts die Hülse ebenfalls rotiert und beim Verfahren des Reibstifts hin zur Bearbeitungsfläche wird die Hülse von der Bearbeitungsfläche weg verfahren. Dabei kann beim Anlegen des Reibwerkzeugs die Hülsenreibfläche an die Bearbeitungsfläche angelegt werden.

Wird bei dieser Alternative die Hülse in Rotation versetzt, so erwärmt die Hülsenreibfläche zunächst auch das weitere Werkstück, das die Wärme an den Stift abgibt. Hierdurch wird der Stift schneller gleichmäßig erwärmt, wodurch die Taktzeit verkürzt und der Stift noch geringeren Belastungen beim plastischen Verformen ausgesetzt wird, was wiederum die Haltbarkeit der Verbindung erhöht. Außerdem wird nicht nur über die Endfläche Reibungsenergie in den Stift eingebracht, sondern auch über die parallel zur Rotationsachse verlaufende Außenfläche des Stifts. Schließlich kann durch das Verfahren der Hülse weg von der Bearbeitungsfläche entgegengesetzt zur Verfahrrichtung des Reibstifts die Verformung des Stifts kontrolliert werden.

In einer zweiten Alternative der vorliegenden Erfindung wird während des Rotierens des Reibstifts die Hülse ebenfalls rotiert, wobei während des Verfahrens des rotierenden Reibstifts die rotierende Hülse parallel mit der Reibfläche hin zu der Bearbeitungsfläche mitbewegt wird. Einerseits ist es möglich, dass sich die Hülsenreibfläche während des Verfahrens in der Ebene der Reibfläche befindet.

Hierdurch können auch Stifte, deren Endfläche größere Abmessungen als die Reibfläche aufweisen, mit dem Werkzeug bearbeitet werden, da dann nicht nur über die Reibfläche des Reibstifts Reibungsenergie in den Stift eingebracht wird, sondern auch über die Hülsenreibfläche. Dies ist besonders dann sinnvoll, wenn verschieden große Stifte am gleichen Kunststoffwerkstück verarbeitet werden sollen, da das Werkzeug zwischen zwei unterschiedliche Ausmaße aufweisenden Stiften nicht ausgewechselt werden muss.

Andererseits ist es möglich, die Hülsenreibfläche während des Verfahrens versetzt zu der Ebene der Reibfläche anzuordnen. In einer besonders bevorzugten Ausführungsform entspricht der Innendurchmesser der Hülse dann dem Außendurchmesser des Stifts. Beim Anlegen des Reibwerkzeuges wird die Hülse zudem derart positioniert, dass eine zu dem Reibstift weisende Innenfläche der Hülse an dem Stift anliegt. Wird die Hülse in dieser Konfiguration mit in Rotation versetzt, so wird auch die Außenfläche des Stiftes erwärmt, wodurch dieser besonders schnell plastifiziert wird, was die Taktzeit verkürzt und die mechanischen Belastungen reduziert, denen der Stift beim plastischen Verformen ausgesetzt ist.

In bevorzugter Weise ist die Durchgangsöffnung derart ausgestaltet, dass benachbart zu der Bearbeitungsfläche einen Abschnitt vorgesehen ist, in dem sich die Abmessungen der Durchgangsöffnung hin zu der Bearbeitungsfläche vergrößern. Insbesondere kann bei einer kreisförmigen Durchgangsöffnung der Durchmesser in diesem Abschnitt zunehmen. Eine solche Ausgestaltung ist mit dem Vorteil verbunden, dass es möglich ist, dass eine formschlüssige Verbindung schon dadurch erreicht wird, dass der Stift bei der Verformung schon innerhalb der Durchgangsöffnung aufgeweitet wird. Dies erhöht die Festigkeit der Verbindung, und es kann ggf. darauf verzichtet werden, dass der verformte Stift sich noch über die Bearbeitungsfläche hinaus aus der Durchgangsöffnung erstreckt und an der Bearbeitungsfläche anliegt.

Es ist weiterhin bevorzugt, dass in der Innenwandung der Durchgangsöffnung des weiteren Werkstücks eine oder mehrere Aussparungen vorgesehen sind, die sich senkrecht zur Durchgangsöffnung erstrecken. Auch hier kann eine formschlüssige Verbindung bereits dadurch erreicht werden, dass der Stift sich in die Aussparung hinein verformt, wodurch sich die oben genannten Vorteile ergeben.

In einer weiteren bevorzugten Ausführungsform ist in der Innenwandung der Durchgangöffnung des weiteren Werkstücks eine schraubenförmig verlaufende Vertiefung vorgesehen. Hier kann ebenfalls eine formschlüssige Verbindung alleine durch die Verformung des Stiftes in die schraubenförmig verlaufende Vertiefung hinein erzeugt werden. Auch für diese formschlüssige Verbindung ergeben sich die oben genannten Vorteile.

Im Folgenden wird die vorliegende Erfindung anhand einer lediglich bevorzugte Ausführungsbeispiele zeigenden Zeichnung erläutert. In der Zeichnung zeigen
- Fig. 1: ein erstes bevorzugtes Ausführungsbeispiel des erfindungsgemäßen Verfahrens,
- Fig. 2: ein zweites bevorzugtes Ausführungsbeispiel des erfindungsgemäßen Verfahrens,
- Fig. 3: eine vergrößerte Darstellung eines erfindungsgemäßen Ausführungsbeispiels der Durchgangsöffnung in dem weiteren Werkstück,
- Fig. 4: eine vergrößerte Darstellung eines weiteren erfindungsgemäßen Ausführungsbeispiels der Durchgangsöffnung in dem weiteren Werkstück und
- Fig. 5: eine vergrößerte Darstellung eines weiteren erfindungsgemäßen Ausführungsbeispiels der Durchgangsöffnung in dem weiteren Werkstück.

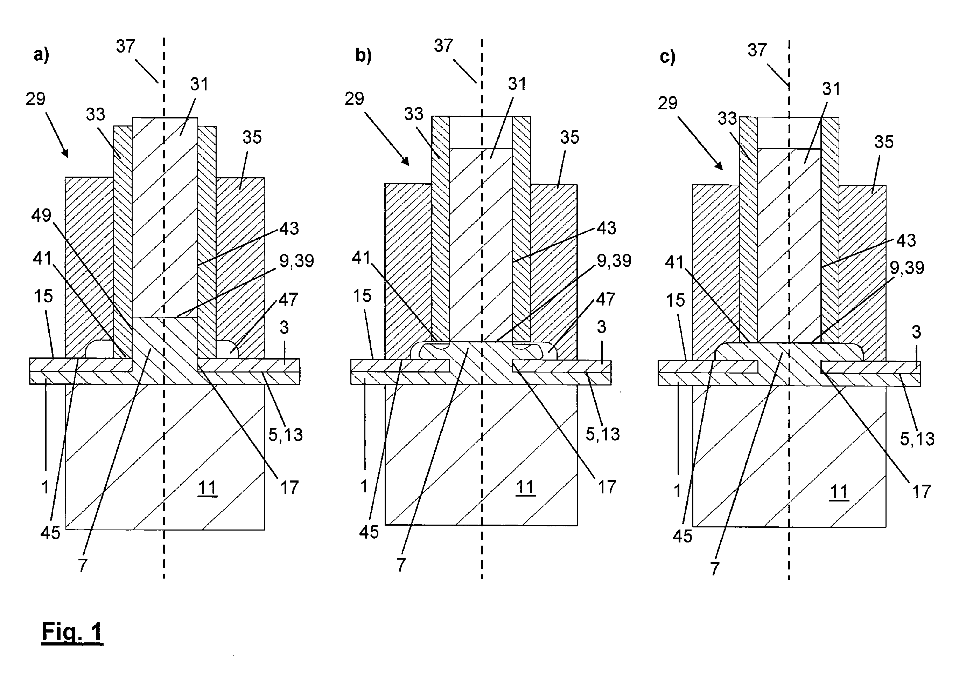

In Fig. 1 sind mehrere Schritte eines ersten Ausführungsbeispiels eines erfindungsgemäßen Verfahrens zur Verbindung eines Kunststoffwerkstück 1 mit einem weiteren Werkstück 3 dargestellt. Das Kunststoffwerkstück 1 weist eine erste Anlageoberfläche 5 auf, an der ein sich von der ersten Anlageoberfläche 5 weg erstreckender zylindrischer Stift 7 mit einer Endfläche 9 vorgesehen ist. Unterhalb des Kunststoffwerkstücks 1 ist ein Gegenlager 11 angeordnet.

Das bereitgestellte weitere Werkstück 3, das vorzugweise aus einem Metall oder einem Verbundwerkstoff gebildet ist, weist eine zweite Anlageoberfläche 13 und eine der zweiten Anlageoberfläche 13 gegenüberliegende Bearbeitungsfläche 15 auf. Des Weiteren ist in dem weiteren Werkstück 3 eine Durchgangsöffnung 17 vorgesehen, die sich von der zweiten Anlageoberfläche 13 zu der Bearbeitungsfläche 15 erstreckt und die dem Querschnitt des Stiftes 7 angepasst ist.

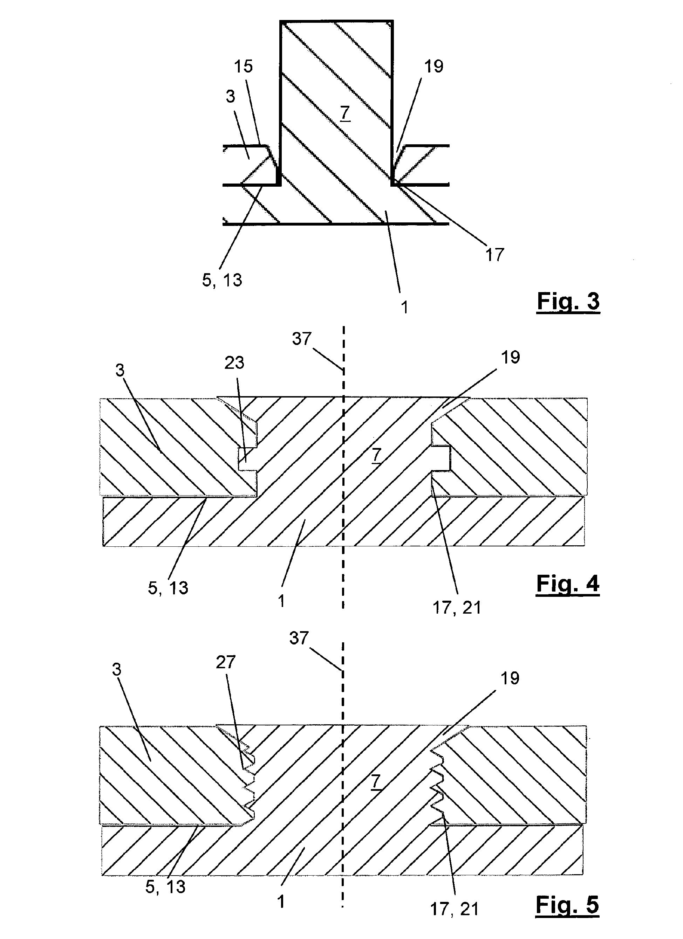

Wie im Detail in Fig. 3 zu erkennen ist, kann die Durchgangsöffnung 17 benachbart zu der Bearbeitungsfläche 15 einen Abschnitt 19 aufweisen, in dem sich die Abmessungen der Durchgangsöffnung 17 hin zu der Bearbeitungsfläche 15 vergrößern. Insbesondere nimmt bei der hier dargestellten, in bevorzugter Weise kreisförmig ausgebildeten Durchgangsöffnung 17 der Durchmesser der Durchgangsöffnung 17 in dem Abschnitt 19 zu.

In der Detaildarstellung der Durchgangsöffnung 17 in Fig. 4 ist zu erkennen, dass zusätzlich zu dem Abschnitt 19, in dem sich die Abmessungen der Durchgangsöffnung 17 hin zu der Bearbeitungsfläche 15 vergrößern, in der Innenwandung 21 der Durchgangsöffnung 17 des weiteren Werkstücks 3 eine oder mehrere Aussparungen 23 vorgesehen sein können, die sich senkrecht zu der Durchgangsöffnung 17 und damit radial von der Rotationsachse 37 weg erstrecken. In Fig. 5 ist im Detail dargestellt, dass es auch möglich ist, dass neben dem Abschnitt 19 in der Innenwandung 21 der Durchgangsöffnung 17 eine schraubenförmig verlaufende Vertiefung 27 vorgesehen ist. Es ist darüber hinaus vorstellbar, dass die Innenwandung 21 der Durchgangsöffnung 17 nur eine oder mehrere Aussparungen 23 oder nur eine schraubenförmig verlaufende Vertiefung 27 und keinen Abschnitt 19 oder auch eine Kombination aus einer oder mehreren Aussparungen 23 und einer schraubenförmigen Vertiefung 27 aufweisen.

In Fig. 1 a) ist gezeigt, dass das weitere Werkstück 3 derart an das Kunststoffwerkstück 1 angelegt wird, dass die zweite Anlageoberfläche 13 auf der ersten Anlageoberfläche 5 aufliegt und dass der Stift 7 sich durch die Durchgangsöffnung 17 hindurch und über die Bearbeitungsfläche 15 hinaus erstreckt.

Darüber hinaus wird ein Reibwerkzeug 29 an dem weiteren Werkstück 3 angelegt. Das Reibwerkzeug 29 umfasst einen Reibstift 31, eine Hülse 33 und einen Klemmring 35, die alle zylindrisch ausgebildet sind. Der Reibstift 31 ist um eine Rotationsachse 37 rotierend angetrieben und weist eine senkrecht zur Rotationsachse 37 verlaufende Reibfläche 39 auf, die zu der Endfläche 9 des Stifts 7 weist. Die Reibfläche 39 weist die gleichen Abmessungen wie die Endfläche 9 auf und ist so auf der Endfläche 9 angeordnet, dass diese bei einer Rotation des Reibstiftes 31 um die Rotationsachse 37 unter allen Drehwinkeln vollständig flächig an der Reibfläche 39 anliegt.

Die Hülse 33 ist zwischen dem Reibstift 31 und dem Klemmring 35 angeordnet und ebenfalls rotierend um die Rotationsachse 37 angetrieben. Sie weist eine senkrecht zur Rotationsachse 37 verlaufende Hülsenreibfläche 41 auf. Der Innendurchmesser der Hülse 33 entspricht dem Außendurchmesser des Stiftes 7. Die Hülsenreibfläche 41 liegt beim Anlegen des Reibwerkzeugs 29 an das weitere Werkstück 3 flächig auf dessen Bearbeitungsfläche 15 auf und eine zu dem Reibstift 31 weisende Innenfläche 43 der Hülse 33 liegt an dem Stift 7 an.

Der die Hülse 33 umgebene Klemmring 35 weist eine flächig auf der Bearbeitungsfläche 15 aufliegende Klemmfläche 45 auf, die senkrecht zur Rotationsachse 37 verläuft. Zudem ist in dem Klemmring 35 eine Schmelzausnehmung 47 vorgesehen, die den Übergang zwischen einer zur Hülse 33 weisenden Innenfläche des Klemmrings 35 und der Klemmfläche 45 darstellt und die sich von der Rotationsachse 37 weg parallel zu der Bearbeitungsfläche 15 in den Klemmring 35 hinein erstreckt. Das Reibwerkzeug 29 ist derart ausgebildet, dass der Reibstift 31, die Hülse 33 und der Klemmring 35 parallel zur Rotationsachse 37 verfahrbar sind.

Nachdem das Reibwerkzeug 29 in der zuvor beschriebenen Weise an dem weiteren Werkstück 3 angelegt worden ist, werden der Reibstift 31 und die Hülse 33 in Rotation versetzt, wobei sie um dieselbe Rotationsachse 37 mit der gleichen Rotationsrichtung rotieren. Im Unterschied dazu wird der Klemmring 35 nicht rotiert und die Klemmfläche 45 liegt fest auf der Bearbeitungsfläche 15 auf. Dabei entsteht durch die Reibung der Reibfläche 39 an der Endfläche 9, der Innenfläche 43 an dem Stift 7 und der Hülsenreibfläche 31 an der Bearbeitungsfläche 15 Reibungswärme. Vorzugsweise ist das weitere Werkstück 3 aus einem Material ausgebildet, das gute Wärmeleitungseigenschaften aufweist, so dass der Stift 7 gleichmäßig erwärmt und dadurch plastifiziert wird.

In einem weiteren Schritt gemäß Fig. 1 b) werden der rotierende Reibstift 7 parallel zur Rotationsachse 37 auf die Bearbeitungsfläche 15 zu und die rotierende Hülse 33 gleichzeitig von der Bearbeitungsfläche 15 weg verfahren. Hierdurch kann sich der zumindest teilweise plastifizierte Stift 7 entlang der Bearbeitungsfläche 15 in die Schmelzausnehmung 47 hinein plastisch verformen.

Gemäß Fig. 1 c) werden der rotierende Stift 7 und die rotierende Hülse 33 so weit verfahren, bis der Stift 7 so weit plastisch verformt ist, dass er die Schmelzausnehmung 47 vollständig ausfüllt. Die Reibfläche 39 und die Hülsenreibfläche 41 liegen zudem in einer Ebene und in Abschluss mit der Endfläche 9 des plastisch verformten Stifts 7. Anschließend kann das Reibwerkzeug 29 von den Werkstücken 1, 3 entfernt werden, wobei die beiden Werkstücken 1, 3 nach dem Auskühlen des plastisch verformten Stiftes 7 formschlüssig verbunden sind.

Das erfindungsgemäße Ausführungsbeispiel gemäß Fig. 1 weist den Vorteil auf, dass die Reibungsenergie zum Plastifizieren des Stifts 7 unmittelbar in diesen eingebracht wird. Dadurch, dass der Stift 7 sowohl von der Endfläche 9 als auch von einer Außenfläche 49 her erwärmt wird, wird er besonders schnell plastifiziert. Auf diese Weise ist es möglich, den Stift 7 innerhalb sehr kurzer Zeit plastisch zu verformen und ihn gleichzeitig nur geringen mechanischen Belastungen auszusetzen.

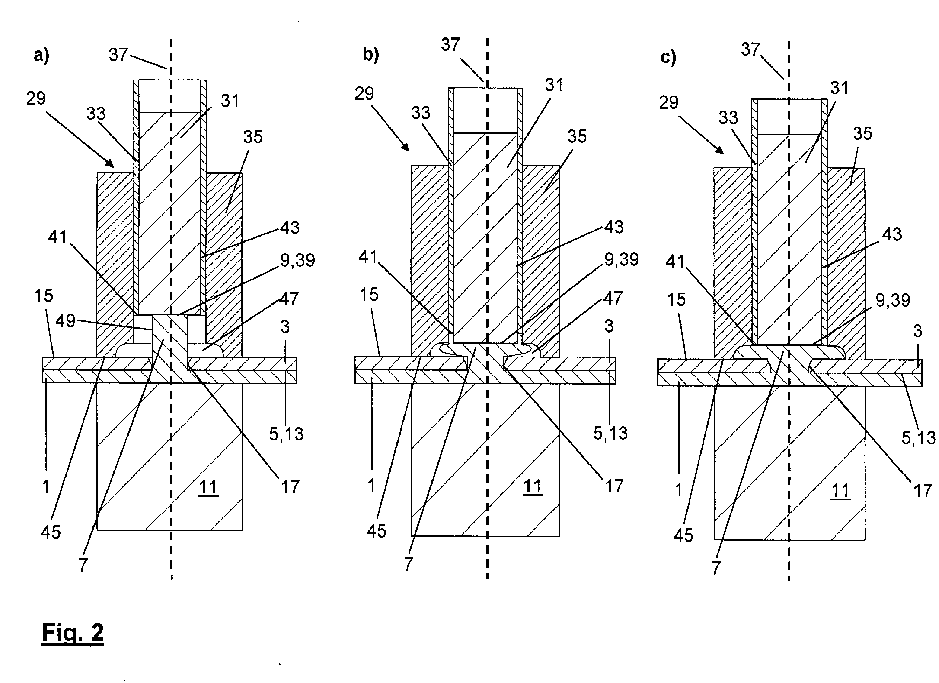

In Fig. 2 ist ein weiteres Ausführungsbeispiel dargestellt, das sich von dem ersten Ausführungsbeispiel dadurch unterscheidet, dass die Reibfläche 39 des Reibstifts 31 des angelegten Reibwerkzeugs 29 größere Abmessungen als die Endfläche 9 des Stifts 7 des bereitgestellten Kunststoffwerkstücks 1 aufweist. Folglich ist auch der Innendurchmesser der Hülse 33 größer als der Außendurchmesser des Stiftes 7 und die Innenfläche 43 liegt nicht an dem Stift 7 an. Wenn das Reibwerkzeug 29 an das weitere Werkstück 3 angelegt wird, befindet sich die Hülsenreibfläche 41 in einer Ebene mit der Reibfläche 39 und liegt daher nicht an der Bearbeitungsfläche 15 an. Dennoch liegt der Klemmring 35 auf der Bearbeitungsfläche 15 auf.

Nachdem der Reibstift 31 und die Hülse 33 in Rotation versetzt worden sind, während auch hier der Klemmring 35 fest auf der Bearbeitungsfläche 15 aufliegt, entsteht nur durch die Reibung zwischen der Reibfläche 39 und der Endfläche 9 Reibungswärme. Der Stift 7 wird daher nur von der Endfläche 9 her erwärmt. Der rotierende Reibstift 31 und die rotierende Hülse 33 werden parallel zur Rotationsachse 37 auf die Bearbeitungsfläche 15 zu bewegt, wobei sich die Reibfläche 39 und die Hülsenreibfläche 41 entweder in einer Ebene befinden, oder aber der Abstand zwischen der Reibfläche 39 und der Bearbeitungsfläche 15 gemäß Fig. 2 b) kleiner ist als der Abstand zwischen Hülsenreibfläche 41 und der Bearbeitungsfläche 15. In letzterem Fall bei versetzter Hülse 33 kann die Verformung des Stifts 7 damit gesteuert werden.

Gemäß Fig. 2 c) werden der rotierende Reibstift 31 und die rotierende Hülse 33 insgesamt so weit verfahren, bis der Stift 7 derart plastisch verformt ist, dass er die Schmelzausnehmung 47 vollständig ausfüllt und die Reibfläche 39 und die Hülsenreibfläche 41 sich in einer Ebene befinden.

Dieses Ausführungsbeispiel ist besonders vorteilhaft, da jede Form von Stift 7 verarbeitet werden kann, so lange der Querschnitt des Stiftes 7 kleiner ist als der gemeinsame Querschnitt von Reibfläche 39 und Hülsenreibfläche 41. Dies erspart zeitraubende Wechsel des Reibwerkzeugs 29, wenn an dem gleichen Kunststoffwerkstück 1 unterschiedlich große Stifte 7 zur Verbindung mit einem weiteren Werkstück 3 vorgesehen sind.

Wenn, wie dies in Fig. 3 gezeigt ist, die Durchgangsöffnung 17 mit einem Abschnitt 19 mit sich zur Bearbeitungsfläche 15 hin vergrößernden Abmessungen versehen ist, ergibt sich der Vorteil, dass es auch möglich ist, dass eine formschlüssige Verbindung schon dadurch erreicht wird, dass der Stift 7 bei der Verformung innerhalb der Durchgangsöffnung 17 aufgeweitet wird. Dies erhöht die Festigkeit der Verbindung, und es kann ggf. darauf verzichtet werden, dass der verformte Stift 7 sich noch über die Bearbeitungsfläche 15 hinaus aus der Durchgangsöffnung 17 erstreckt und an der Bearbeitungsfläche 15 anliegt.

Die Festigkeit der Verbindung kann weiter erhöht werden, in dem, wie in Fig. 4 dargestellt ist, eine oder mehrere sich senkrecht von der Durchgangsöffnung 17 in die Innenwandung 21 hinein erstreckende Aussparungen 23 ausgebildet sind. Hier kann ebenfalls eine formschlüssige Verbindung allein dadurch erreicht werden, dass der Stift 7 sich in die Aussparungen 23 hinein verformt. Alternativ ist es nach der Darstellung in Fig. 5 auch möglich, die Innenwandung 21 der Durchgangsöffnung 17 mit einer schraubenförmig verlaufenden Aussparung 27 zu versehen. Verformt sich der Stift 7 in die schraubenförmig verlaufende Aussparung 27 hinein, so entsteht ebenfalls eine formschlüssige Verbindung.

Das erfindungsgemäße Verfahren ermöglicht es in einfacher Weise ohne großen vorrichtungsmäßigen Aufwand, eine formschlüssige Verbindung zwischen einem Kunststoffwerkstück 1 und einem weiteren Werkstück 3 auszubilden. Da der Stift 7 vor seiner plastischen Verformung plastifiziert wird, sind die mechanischen Belastungen, denen das Stiftmaterial ausgesetzt ist, besonders klein. Die so geschaffenen Verbindungen weisen daher eine besonders hohe Festigkeit auf. Gegenüber anderen Verfahren, die ebenfalls vor der plastischen Verformung den Stift 7 plastifizieren, zeichnet sich das erfindungsgemäße Verfahren durch einen besonders niedrigen Energieverbrauch auf, da die Reibungsenergie unmittelbar in das zu verformende Element, nämlich den Stift 7, eingebracht wird.

## Patentansprüche

1. Verfahren zum Verbinden eines Kunststoffwerkstücks (1) mit einem weiteren Werkstück (3) mit den folgenden Schritten:
- Bereitstellen eines Kunststoffwerkstücks (1) mit einer ersten Anlageoberfläche (5), an der ein sich davon wegerstreckender Stift (7) vorgesehen ist, der eine von der ersten Anlageoberfläche (5) wegweisende Endfläche (9) hat,
- Bereitstellen eines weiteren Werkstücks (3) mit einer zweiten Anlageoberfläche (13) und einer der zweiten Anlageoberfläche (13) gegenüberliegenden Bearbeitungsfläche (15), wobei in dem weiteren Werkstück (3) eine dem Querschnitt des Stifts (7) angepasste Durchgangsöffnung (17) vorgesehen ist, die sich von der zweiten Anlageoberfläche (13) zu der Bearbeitungsfläche (15) erstreckt,
- Anlegen des weiteren Werkstücks (3) und des Kunststoffwerkstücks (1) aneinander derart, dass die zweite Anlageoberfläche (13) auf der ersten Anlageoberfläche (5) liegt, wobei sich der Stift (7) durch die Durchgangsöffnung (17) hindurch über die Bearbeitungsfläche (15) hinaus erstreckt,
- Anlegen eines Reibwerkzeugs (29) an das weitere Werkstück (3),
wobei das Reibwerkzeug (29) einen um eine Rotationsachse (37) rotierend angetriebenen Reibstift (31) mit senkrecht zur Rotationsachse (37) verlaufender Reibfläche (39) und einen Klemmring (35) mit einer senkrecht zur Rotationsachse (37) verlaufenden Klemmfläche (45) aufweist,
wobei der Klemmring (35) den Reibstift (31) umgibt und der Reibstift (31) und der Klemmring (35) parallel zur Rotationsachse (37) verfahrbar sind,
wobei beim Anlegen die Reibfläche (39) flächig auf der Endfläche (9) und die Klemmfläche (45) flächig auf der Bearbeitungsfläche (15) aufgelegt wird,
- Rotieren des Reibstifts (31), sodass die zwischen der Reibfläche (39) und der Endfläche (9) durch Reibung entstehende Reibungswärme den Stift (7) plastifiziert, und
- Verfahren des rotierenden Reibstifts (31) parallel zur Rotationsachse (37) auf die Bearbeitungsfläche (15) zu, sodass sich der Stift (7) plastisch verformt,
wobei das Reibwerkzeug (29) eine um die Rotationsachse (37) rotierend angetriebene und parallel zur Rotationsachse (37) verfahrbare ringförmige Hülse (33) mit einer senkrecht zur Rotationsachse (37) verlaufenden Hülsenreibfläche (41) aufweist,
wobei die Hülse (33) zwischen dem Reibstift (31) und dem Klemmring (35) angeordnet ist,
wobei beim Rotieren des Reibstifts (31) die Hülse (33) rotiert wird und
wobei entweder
a) beim Verfahren des Reibstifts (31) hin zur Bearbeitungsfläche (15) die Hülse (33) von der Bearbeitungsfläche (15) weg verfahren wird oder
b) während des Verfahrens des Reibstifts (31) die Hülse (33) parallel mit der Reibfläche (39) hin zu der Bearbeitungsfläche (15) mitbewegt wird.

2. Verfahren nach Anspruch 1, wobei die Reibfläche (39) derartige Abmessungen aufweist, dass bei einer Rotation des Reibstiftes (31) um die Rotationsachse (37) die Endfläche (9) unter allen Rotationswinkeln vollständig flächig an der Reibfläche (39) anliegt.

3. Verfahren nach Anspruch 1 oder 2, wobei der Stift (7) zylinderförmig ausgebildet ist.

4. Verfahren nach Anspruch 3, wobei der Außendurchmesser des Reibstiftes (31) dem Außendurchmesser des Stiftes (7) entspricht.

5. Verfahren nach Anspruch 1, wobei im Fall, dass beim Verfahren des Reibstifts (31) hin zur Bearbeitungsfläche (15) die Hülse (33) von der Bearbeitungsfläche (15) weg verfahren wird, beim Anlegen des Reibwerkzeugs (29) die Hülsenreibfläche (41) an die Bearbeitungsfläche (15) angelegt wird.

6. Verfahren nach Anspruch 1, wobei im Fall, dass während des Verfahrens des Reibstifts (31) die Hülse (33) parallel mit der Reibfläche (39) hin zu der Bearbeitungsfläche (15) mitbewegt wird, die Hülsenreibfläche (41) während des Verfahrens versetzt zu der Ebene der Reibfläche (39) ist.

7. Verfahren nach Anspruch 1, wobei im Fall, dass während des Verfahrens des Reibstifts (31) die Hülse (33) parallel mit der Reibfläche (39) hin zu der Bearbeitungsfläche (15) mitbewegt wird, sich die Hülsenreibfläche (41) während des Verfahrens in der Ebene der Reibfläche (39) befindet.

8. Verfahren nach einem der Ansprüche 3 und 5 bis 7 sofern abhängig von Anspruch 3, wobei der Innendurchmesser der Hülse (33) dem Außendurchmesser des Stifts (7) entspricht, und
wobei beim Anlegen des Reibwerkzeuges (29) die Hülse (33) derart positioniert wird, dass eine zu dem Reibstift (31) weisende Innenfläche (43) der Hülse (33) an dem Stift (7) anliegt.

9. Verfahren nach einem der vorhergehenden Ansprüche, wobei das weitere Werkstück (3) aus einem Metall, einer Metalllegierung, einer Keramik oder einem Verbundwerkstoff gebildet ist.

10. Verfahren nach einem der vorhergehenden Ansprüche, wobei das weitere Werkstück (3) aus Kunststoff gebildet ist.

11. Verfahren nach einem der vorhergehenden Ansprüche, wobei die Durchgangsöffnung (17) benachbart zu der Bearbeitungsfläche (15) einen Abschnitt (19) aufweist, in dem sich die Abmessungen der Durchgangsöffnung (17) hin zu der Bearbeitungsfläche (15) vergrößern.

12. Verfahren nach einem der vorhergehenden Ansprüche, wobei in der Innenwandung (21) der Durchgangsöffnung (17) des weiteren Werkstücks (3) eine oder mehrere Aussparungen (23) vorgesehen sind, die sich senkrecht zur Durchgangsöffnung (17) erstrecken.

13. Verfahren nach einem der vorhergehenden Ansprüche, wobei in der Innenwandung (21) der Durchgangöffnung (17) des weiteren Werkstücks (3) eine schraubenförmig verlaufende Vertiefung (27) vorgesehen ist.

## Claims

1. A method for connecting a plastic workpiece (1) to a further workpiece (3) with the following steps:
- providing a plastic workpiece (1), comprising a first abutting surface (5), provided on which is a pin (7) projecting away from it and having an end face (9) facing away from the first abutting surface (5),
- providing a further workpiece (3), comprising a second abutting surface (13) and a working surface (15) opposite from the second abutting surface (13), a through-opening (17) which is adapted to the cross section of the pin (7) and extends from the second abutting surface (13) to the working surface (15) being provided in the further workpiece (3),
- placing the further workpiece (3) and the plastic workpiece (1) against each other in such a way that the second abutting surface (13) lies on the first abutting surface (5), the pin (7) extending through the through-opening (17), beyond the working surface (15),
- placing a friction tool (29) against the further workpiece (3),
the friction tool (29) having a friction pin (31) driven in a rotating manner about an axis of rotation (37) and comprising a friction surface (39) extending perpendicularly in relation to the axis of rotation (37) and having a clamping ring (35) comprising a clamping surface (45) extending perpendicularly in relation to the axis of rotation (37),
the clamping ring (35) surrounding the friction pin (31) and the friction pin (31) and the clamping ring (35) being able to be moved parallel to the axis of rotation (37),
placement involving the friction surface (39) being placed flat on the end face (9) and the clamping surface (45) being placed flat on the working surface (15),
- rotating the friction pin (31), so that the frictional heat produced by friction between the friction surface (39) and the end face (9) brings the pin (7) into a plasticized state, and
- moving the rotating friction pin (31) parallel to the axis of rotation (37) toward the working surface (15), so that the pin (7) is plastically deformed, wherein the friction tool (29) has an annular sleeve (33), which is driven in a rotating manner about the axis of rotation (37), which can be moved parallel to the axis of rotation (37), and which comprises a sleeve friction surface (41) extending perpendicularly in relation to the axis of rotation (37),
wherein the sleeve (33) is arranged between the friction pin (31) and the clamping ring (35),
wherein the sleeve (33) is rotated when the friction pin (31) rotates, and
wherein either
a) the sleeve (33) is moved away from the working surface (15) when the friction pin (31) moves toward the working surface (15), or
b) during the moving of the friction pin (31), the sleeve (33) is also moved parallel to the friction surface (39) toward the working surface (15).

2. The method as claimed in claim 1, the friction surface (39) having such dimensions that, when there is a rotation of the friction pin (31) about the axis of rotation (37), the end face (9) lies completely flat against the friction surface (39) at all angles of rotation.

3. The method as claimed in claim 1 or 2, the pin (7) being cylindrically formed.

4. The method as claimed in claim 3, the outside diameter of the friction pin (31) corresponding to the outside diameter of the pin (7).

5. The method as claimed in claim 1, wherein in the case that the sleeve (33) is moved away from the working surface (15) when the friction pin (31) moves toward the working surface (15), placement of the friction tool (29) involving the sleeve friction surface (41) being placed against the working surface (15).

6. The method as claimed in claim 1, wherein in the case that during the moving of the friction pin (31) the sleeve (33) is also moved parallel to the friction surface (39) toward the working surface (15), the sleeve friction surface (41) being offset from the plane of the friction surface (39) during the moving.

7. The method as claimed in claim 1, wherein in the case that during the moving of the friction pin (31) the sleeve (33) is also moved parallel to the friction surface (39) toward the working surface (15), the sleeve friction surface (41) being in the plane of the friction surface (39) during the moving.

8. The method as claimed in one of the claims 3 and 5 to 7, where dependent on claim 3, the inner diameter of the sleeve (33) corresponding to the outside diameter of the pin (7), and
placement of the friction tool (29) involving the sleeve (33) being positioned in such a way that an inner surface (43) of the sleeve (33) that is facing the friction pin (31) lies against the pin (7).

9. The method as claimed in one of the preceding claims, the further workpiece (3) being formed from a metal, a metal alloy, a ceramic or a composite material.

10. The method as claimed in one of the preceding claims, the further workpiece (3) being formed from plastic.

11. The method as claimed in one of the preceding claims, the through-opening (17) having alongside the working surface (15) a portion (19) in which the dimensions of the through-opening (17) increase toward the working surface (15).

12. The method as claimed in one of the preceding claims, one or more clearances (23), which extend perpendicularly in relation to the through-opening (17), being provided in the inner wall (21) of the through-opening (17) of the further workpiece (3).

13. The method as claimed in one of the preceding claims, a helically extending depression (27) being provided in the inner wall (21) of the through-opening (17) of the further workpiece (3).

## Revendications

1. Procédé destiné à relier une pièce à travailler en matière plastique (1) à une pièce à travailler supplémentaire (3), comprenant les étapes suivantes :
- préparation d'une pièce à travailler en matière plastique (1) dotée d'une première surface d'appui (5) sur laquelle est prévue une tige (7) qui s'étend à partir de cette surface et qui présente une surface d'extrémité (9) tournée dans la direction opposée à la première surface d'appui (5),
- préparation d'une pièce à travailler supplémentaire (3) dotée d'une deuxième surface d'appui (13) et d'une surface à travailler (15) située à l'opposé de la deuxième surface d'appui (13), la pièce à travailler supplémentaire (3) comportant une ouverture traversante (17) qui est adaptée à la section transversale de la tige (7) et qui s'étend depuis la deuxième surface d'appui (13) jusqu'à la surface à travailler (15);
- application, l'une contre l'autre, de la pièce à travailler supplémentaire (3) et de la pièce à travailler en matière plastique (1), de telle sorte que la deuxième surface d'appui (13) soit appliquée contre la première surface d'appui (5), la tige (7) passant dans l'ouverture traversante (17) et s'étendant au-delà de la surface à travailler (15),
- application d'un outil de friction (29) contre la pièce à travailler supplémentaire (3),
l'outil de friction (29) présentant une tige de friction (31) qui est entraînée en rotation autour d'un axe de rotation (37) et est dotée d'une surface de friction (39) perpendiculaire à l'axe de rotation (37) et d'une bague de serrage (35) pourvue d'une surface de serrage (45) perpendiculaire à l'axe de rotation (37),
la bague de serrage (35) entourant la tige de friction (31), et la tige de friction (31) et la bague de serrage (35) pouvant être déplacées parallèlement à l'axe de rotation (37),
lors de l'application, la surface de friction (39) étant appliquée à plat contre la surface d'extrémité (9), et la surface de serrage (45) étant appliquée à plat contre la surface à travailler (15),
- rotation de la tige de friction (31), de sorte que la chaleur de frottement produite par frottement entre la surface de friction (39) et la surface d'extrémité (9) plastifie la tige (7), et
- déplacement de la tige de friction (31) en rotation, parallèlement à l'axe de rotation (37), en direction de la surface à travailler (15), de sorte que la tige (7) se déforme de manière plastique,
l'outil de friction (29) présentant une douille (33) annulaire qui est entraînée en rotation autour de l'axe de rotation (37) et peut être déplacée parallèlement à l'axe de rotation (37) et est dotée d'une surface de friction de douille (41) s'étendant perpendiculairement à l'axe de rotation (37),
la douille (33) étant disposée entre la tige de friction (31) et la bague de serrage (35),
la douille (33) étant mise en rotation lors de la rotation de la tige de friction (31), et
sachant que soit
a) lors du déplacement de la tige de friction (31) en direction de la surface à travailler (15), la douille (33) est déplacée dans la direction opposée à la surface à travailler (15), soit
b) pendant le déplacement de la tige de friction (31), la douille (33) est entraînée parallèlement avec la surface de friction (39), en direction de la surface à travailler (15).

2. Procédé selon la revendication 1, selon lequel la surface de friction (39) présente des dimensions telles que lors d'une rotation de la tige de friction (31) autour de l'axe de rotation (37), la surface d'extrémité (9) soit appliquée complètement à plat contre la surface de friction (39) sous tous les angles de rotation.

3. Procédé selon la revendication 1 ou 2, selon lequel la tige (7) est réalisée sous une forme cylindrique.

4. Procédé selon la revendication 3, selon lequel le diamètre extérieur de la tige de friction (31) correspond au diamètre extérieur de la tige (7).

5. Procédé selon la revendication 1, selon lequel, dans le cas où la douille (33) est éloignée de la surface à travailler (15) lorsque la tige de friction (31) est déplacée en direction de la surface à travailler (15), la surface de friction de douille (41) est appliquée contre la surface à travailler (15) lorsque l'outil de friction (29) est appliqué.

6. Procédé selon la revendication 1, selon lequel, dans le cas où, lors du déplacement de la tige de friction (31), la douille (33) est entraînée parallèlement avec la surface de friction (39) en direction de la surface à travailler (15), la surface de friction de douille (41) est décalée par rapport au plan de la surface de friction (39), pendant le déplacement.

7. Procédé selon la revendication 1, selon lequel, dans le cas où, lors du déplacement de la tige de friction (31), la douille (33) est entraînée parallèlement avec la surface de friction (39) en direction de la surface à travailler (15), la surface de friction de douille (41) se situe dans le plan de la surface de friction (39), pendant le déplacement.

8. Procédé selon l'une des revendications 3 et 5 à 7, dans la mesure où elles dépendent de la revendication 3, selon lequel le diamètre intérieur de la douille (33) correspond au diamètre extérieur de la tige (7), et
selon lequel, lors de l'application de l'outil de friction (29), la douille (33) est positionnée de manière telle qu'une surface interne (43) de la douille (33), tournée vers la tige de friction (31), soit appliquée contre la tige (7).

9. Procédé selon l'une des revendications précédentes, selon lequel la pièce à travailler supplémentaire (3) est réalisée dans un métal, un alliage métallique, une céramique ou un matériau composite.

10. Procédé selon l'une des revendications précédentes, selon lequel la pièce à travailler supplémentaire (3) est réalisée en matière plastique.

11. Procédé selon l'une des revendications précédentes, selon lequel l'ouverture traversante (17) présente une portion (19) qui est située à proximité de la surface à travailler (15) et dans laquelle les dimensions de l'ouverture traversante augmentent en direction de la surface à travailler (15).

12. Procédé selon l'une des revendications précédentes, selon lequel il est prévu, dans la paroi interne (21) de l'ouverture traversante (17) de la pièce à travailler supplémentaire (3), un ou plusieurs évidements (23) qui s'étendent perpendiculairement à l'ouverture traversante (17)

13. Procédé selon l'une des revendications précédentes, selon lequel il est prévu, dans la paroi interne (21) de l'ouverture traversante (17) de la pièce à travailler supplémentaire (3), un creux (27) s'étendant sous une forme hélicoïdale.
